# EUROPEAN PATENT APPLICATION

(11) **EP 3 981 859 A1**
(43) Date of publication of application: **13.04.2022**
(21) Application number: 20200980.9
(22) Date of filing: 09.10.2020
(51) Int. Cl.: C10G 9/24, C10G 9/20, B01J 19/08, B01J 19/24

(54) **ELECTRIC REACTOR FOR STEAM CRACKING**

(71) Applicant: Pauletto, Gianluca, Montreal, QC H4A 3E6 (CA)
(72) Inventor: Pauletto, Gianluca, Montreal, QC H4A 3E6 (CA)
(74) Representative: Kaya, Erdem

(57) **Abstract**

The invention relates to a reactor shell (10) for producing olefins via steam cracking from a fed reactive mixture stream composed of steam and hydrocarbon comprising: at least one reactive stream duct (20) formed within said reactor shell (10), a structured ceramic bed (30) having a plurality of hollow flow paths (32), an electrical heating means (40) for healing the reactive mixture stream up to a predetermined reaction temperature and a coating (31) provided on a surface contacting with the reactive mixture stream. The reactor shell (10) is characterized in that said electrical heating means (40) is arranged inside at least some of said hollow flow paths (32) in a manner that there still remains a flowing passage (323) inside the holow flow paths (32).

## Description

### TECHNICAL FIELD

The invention relates to a reactor shell for producing olefins via steam cracking from a fed reactive mixture stream composed of steam and hydrocarbons and particularly a reactor shell having a coated structured ceramic bed. The invention also relates to a relevant method where the reactive mixture stream is electrically heated and therein reacted.

### BACKGROUND OF THE INVENTION

Ethylene is the most used chemical and it is industrially produced following a non-catalytic gas phase radical reaction. The demand of ethylene as building block in the so called "Ethylene chain", that includes polyethylene, polyvinylchloride and other styrene-related polymers as final products, is constantly increasing and the current demand has reached 200 million ton per year. Since it is expected that non-catalytic steam cracking will be the most important process to supply olefins in the next decades, considerable effort is dedicated to further improve and decarbonize this process.

The most important pathway to produce ethylene and propylene is steam cracking of naphtha, ethane, propane, gas oil and liquefied petroleum gas. Steam crackers are the most important reacting units in the petrochemical industry as they supply the feed for a wide variety of chemical processes. Steam cracking represents the most energy consuming thermochemical process that currently requires approximately 15% of the total primary energy used in the chemical industry. Approximately 300 million ton of CO₂, the same annual CO₂ emission of Italy, the world's eighth-largest economy, are emitted by this process.

More than 90% of the emitted CO₂ is connected with the production of heat, via fuel combustion, that is required to compensate for the endothermicity of the process/reaction. Indeed, energy fees represent more than 70% of the operational costs. This energy is provided via fuel combustion that involves burning fresh hydrocarbons as well as secondary products of the process.

Steam cracking is carried out within furnaces that can be divided into two different parts. In the upper part of the furnace the feeds, hydrocarbon and steam, are preheated exploiting the heat capacity of the hot flue gases. In the bottom the reactive mixture, preheated at temperature from 500 °C to 700 °C, cross-over temperature, is fed to the cracking/reactor coils and therein reacts.

Only 40 - 50% of the energy produced by the burners of the firebox is absorbed and used by the reaction. The remaining heat is carried by the flue gases and it is used to preheat the feed in the convective section, making possible to operate at overall energy efficiency higher than 90%, achieved thanks to the improved heat recovery systems.

The high reaction endothermicity, the high reaction temperature (750 °C - 900 °C) and the short residence time (below 1 s) require heat fluxes at the reactor coil higher than 30 kW m⁻².

As result there is not uniform radial temperature profile within the reactor coils that results into coke formation on the internal walls of the radiant tubes that creates an additional resistance to the heat transfer. In industry this variable heat transfer resistance requires modulation of the combustion that affects the outside (interface radiant coils - burner) skin temperature. This changes the temperature gradient across the wall of the coils thus the driving force of the heat transfer.

Maximum operating skin temperature (approximately 1200 °C) imposes regular decoking of the metal coils, via gasification of coke into CO and CO₂ using air and/or steam. These decoking procedures involve stops of the production and therefore expensive routine operations.

Engineered coatings for the internal surface of the metal coils that create a barrier for coke deposition or even kinetically minimizes its formation, enhancing coke gasification, extend operation of the reactor coils before regeneration. A mismatch between thermal expansion coefficients and the low chemical affinity between ceramic coatings and metal reactor coils strongly affect the stability of the coating.

Ceramic refractory coils would increase operating temperature and efficiency of the furnace, increase product selectivity, minimize coke deposition and provide adequate surfaces for deposition of coatings. However, the mechanical features of ceramic reactor coils make their application impossible in the current cracking furnaces.

For these reasons, the improvements have mainly involved modifications on the metal coils as: coil section geometry, coil 3D configuration, internal structured packing as well as development of metals that form superficial stable oxides as chromia or alumina that, while preventing further oxidation of the metal, decrease coke formation.

EP3574991 A1 discloses a reactor system for steam reforming heated by electrification of a FeCrAl structured catalyst. A similar configuration without a catalytically active material could also be suggested for steam cracking. The system involves a pressure reactor shell, an internal thermal insulation layer, at least two electrical metal contacts that supply electricity and a macroscopic structure of an electrically conductive material that supports a catalytically active phase. US 20140060014 also discloses an electrically heated catalyst that involves electrification of a macroscopic metal that supports a catalyst.

Even if the electrification of a macroscopic electrically conductive supports brings improvements into the design of reactors, these configurations have mayor technical difficulties and high industrialization costs when applied in highly endothermic processes that involve temperatures higher than 700 °C and heat fluxes higher than 10 kW m⁻². These problems are mainly connected with the electrification of the macroscopic structure that complicates the design of the power contact rails and of the power supply. Industrialization of heating elements and process heaters that exploit macroscopic structures of electrically conductive materials, for applications at temperatures greater than 800 °C, is currently not feasible. Furthermore, the reaction endothermicity of steam cracking imposes surface loading considerably higher compared to traditional gas flow heaters that only exchange specific heat.

Differently, US1727584, US5400432 and US9867232B2 disclose the design of a heating element comprising a ceramic material with a co-axial electric heating wire that can be used as a flow heater to heat up fluids up to 1100°C.

In a recent patent application EP20170265.1 a reactor with an electrically heated structured ceramic catalyst has been disclosed for producing synthesis gas, hydrogen or carbon dioxide following catalytic reactions. The structured ceramic catalyst reaches temperature up to 1300 °C. Potential local hot-spots of the resistance heating means are controlled by the reaction endothermicity that acts as energy sink. As a consequence, the lifetime of the assembly is maximized.

### BRIEF SUMMARY OF THE INVENTION

In view of the above mentioned technical problems encountered in the prior art, one object of the present invention is to minimize the coke formation, pressure drop, carbon dioxide emissions, and to increase the reaction temperature and product selectivity while intensifying the production of olefins via steam cracking.

Another object of the present invention is to provide a reactor, which is used for producing olefins via steam cracking, with lower capital and operating costs and also minimized downtime.

In order to achieve above mentioned objects or those disclosed or to be deducted from the detailed description, the present invention relates to a reactor shell for producing olefins via steam cracking from a fed reactive mixture stream composed of steam and hydrocarbons comprising:
at least one reactive stream duct formed within said reactor shell and essentially having at least one reactive stream inlet where said reactive mixture stream is fed, a product stream outlet where a product stream of olefins exits the reactor shell and at least one reaction section provided between said reactive stream inlet and said product stream outlet,
an insulation filling at least partly encompassing said reactive stream duct,
a structured ceramic bed accommodated in said reaction section and having a plurality of hollow flow paths which are configured to allow the reactive mixture stream to pass therethrough,
an electrical heating means, arranged inside at least some of said hollow flow paths in a manner that there still remains a flowing passage inside the hollow flow paths and powered by an electrical power supply for heating the reactive mixture stream to predetermined temperature that initiates a non-catalytic gas phase radical reactions of steam cracking,
a coating provided on a surface contacting with the reactive mixture stream in order to minimize the coke deposition thereon.

In a probable embodiment of the reactor shell, the electrical heating means comprises meandered sections so that it extends in a meandered manner along the hollow flow paths.

In another probable embodiment of the reactor shell, the electrical heating means is a resistive heating element.

In another probable embodiment of the reactor shell, the electrical heating means and electrical power supply are configured to heat the reactive mixture stream up to a temperature of 1200 °C.

In another probable embodiment of the reactor shell, the structured ceramic bed is a monolith or an assembly of subunits arranged in juxtaposed manner forming a multiplicity of hollow flow paths.

In another probable embodiment of the reactor shell, the reactive stream duct further comprises a distribution section, which is formed in the continuation of the reactive stream inlet, for distributing the reactive mixture stream into the reaction section and a collecting section, which is formed in the continuation of the reaction section, for collecting the product stream and diverting it towards the product stream outlet.

In another probable embodiment of the reactor shell, two reaction sections are provided as aligned in the same direction wherein the insulation filling has a diverting section therebetween in order to divert all the product stream towards the product stream outlet.

In another probable embodiment of the reactor shell, the structured ceramic bed makes use of no limiting example of ceramic materials including SiO₂, Al₂O₃, Y₂O₃, WO₃, ZrO₂. TiO₂, MgO, CaO, CeO₂ and mixture thereof.

In another probable embodiment of the reactor shell, the coating contains elements from the group IIA, IIIB, IVB, VIIB, IIIA, IVA of the periodic table.

In another probable embodiment of the reactor shell, the coating is provided on the surface of the hollow flow paths facing the electrical heating means.

In another probable embodiment of the reactor shell, the coating is provided on the surface of the electrical heating means.

In another probable embodiment of the reactor shell, the coating is a barrier coating preventing the contact between the reactive mixture stream and the structured ceramic bed and/or the electrical heating means and having a thickness that does not affect the heat transfer.

In another probable embodiment of the reactor shell, the coating is a catalytically active coating that activates the oxidation of any potential coke formed via steam cracking reactions using the steam present in the gas phase.

The present invention also relates to a method for producing olefins via steam cracking from a fed reactive mixture stream composed of steam and hydrocarbons in a reactor shell comprising at least one reactive stream duct essentially having a reactive stream inlet, a product stream outlet and a reaction section provided between said reactive stream inlet and product stream outlet, an insulation filling at least partly encompassing said reactive stream duct, a structured ceramic bed accommodated in said reaction section and having a plurality of hollow flow paths which are configured to allow the reactive mixture stream to pass therethrough, an electrical heating means, powered by at least two electrical feeds connected to an electrical power supply, for heating the reactive mixture stream up to a predetermined reaction temperature, and a coating provided on the surfaces contacting with the reactive mixture stream. Said method comprises the steps of:
arranging said electrical heating means inside at least some of said hollow flow paths in a manner that a flowing passage inside the hollow flow paths still remains
energizing the electrical heating means via an electric power supply so that the reactive mixture stream is heated up to 1200 °C
feeding reactive mixture stream with a temperature ranging from 400 °C to 700 °C and a pressure ranging from 1 bar to 10 bar to the reactor shell through said reactive stream inlet
allowing the reactive mixture stream to pass through said hollow flow paths in a manner that the reactive mixture stream contacts the electrical heating means
allowing a product stream of olefins to exit from said product stream outlet

In a probable application of the method, the reactive mixture stream undergoes non-catalytic gas-phase radical reaction of steam cracking in the reaction section and therefore within the structured ceramic bed.

### REFERENCE NUMERALS

10 Reactor shell
11 Insulation filling
111 Diverting section
20 Reactive stream duct
21 Reactive stream inlet
22 Distribution section
23 Reaction section
24 Collecting section
241 Deposition chamber
25 Product stream outlet
30 Structured ceramic bed
31 Coating
311 Barrier coating
312 Catalytically active coating
32 Hollow flow paths
321 Flow path inlet
322 Flow path outlet
323 Flowing passage
40 Electrical heating means
41 Meandered section
50 Electrical power supply
51 Electrical feeds
W: Width

### BRIEF DESCRIPTION OF FIGURES

Figure 1 illustrates a vertical cross section of a reactor shell.
Figure 2 illustrates a vertical cross section of another embodiment of a reactor shell.
Figure 3 illustrates a horizontal cross section of a reactor shell.
Figure 4 illustrates a horizontal cross section of another embodiment of a reactor shell.
Figure 5 illustrates representative view of a coating on a structured ceramic bed.
Figure 6 illustrates representative view of a coating on a structured ceramic bed and electrical heating means.
Figure 7 illustrates a vertical cross section of a structured ceramic bed used in the reactor shell.

### DETAILED DESCRIPTION OF THE INVENTION

Preferred embodiments of the present invention will now be more particularly described by way of non-limiting examples with reference to the accompanying drawings.

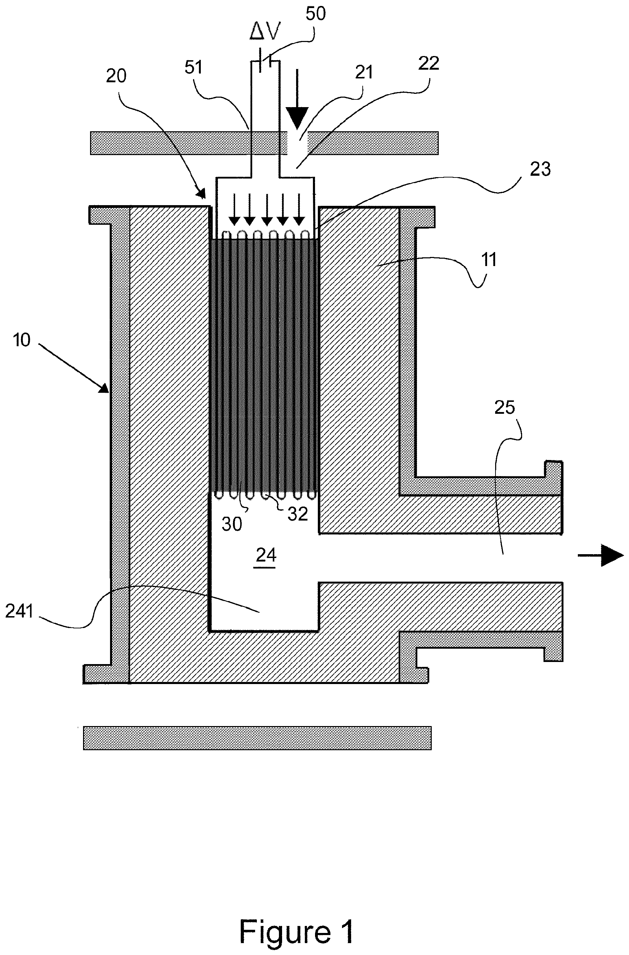

In Figure 1, a shell (10) of a reactor for the production of olefins via steam cracking from a fed reaction stream, i.e. a reactive mixture stream, is shown. Said reactor shell (10) with an insulation filling (11) mainly comprises a reactive stream duct (20), which is formed within the reactor shell (10) so as to be encompassed by said insulation filling (11), and a structured ceramic bed (30) which is arranged within said reactive stream duct (20) for realizing the steam cracking within the reactor shell (10). Said structured ceramic bed (30) is equipped with an electrical heating means (40), which is fed through at least two electrical feeds (51) that are running through the reactor shell (10) in an insulated manner from the reactor shell (10). Said electrical feeds (51) are connected to an electrical power supply (50) which is placed outside the reactor shell (10) and configured to heat the gas stream (30) up to a desired temperature so that the intended reaction takes place. Thanks to this arrangement, the reactive mixture stream flows through the reactive stream duct (20) and exits therefrom after being reacted. The structural and process details will hereunder be explained in detail.

The reactive stream duct (20) comprises, in downstream order, at least one reactive stream inlet (21), distribution section (22), reaction section (23), collecting section (24) and product stream outlet (25). In the preferred embodiment, said distribution section (22) is provided in truncated pyramidal form. However, in other embodiments, the distribution section (22) may have truncated-conical or cylindrical or any other 3D-geometry. Said reaction section (23), comprises the structured ceramic bed (30) and it has equivalent diameter from 5 cm to 300 cm. In one of the embodiments, two reaction sections (23) are provided and accordingly the reactor shell (10) have two reactive stream inlets (21). In this embodiment, the reaction sections (23) are provided as aligned in the same direction in a way that the collecting section (24) is positioned therebetween. The product stream outlet (25) is placed as being perpendicular to the reaction sections (23) in the continuation of the collecting section (24). The insulation filling (11) is provided forming diverting section (111) in the collecting section (24). The diverting section (111) is configured to divert all produced olefins (i.e. product stream) towards the product outlet stream (25). In detail, the diverting section (111) has a width (W) from 0.5 to 1.0 of the width of the structured ceramic bed (30) in order to divert the product stream towards the product stream outlet (25) in a manner that any product stream does not remain in the collecting section (24). In the embodiment having one reaction section (23), the product stream outlet (25) may be positioned as being perpendicular to the reaction section (23) or in the direction of the same, as connected to the collecting section (24).

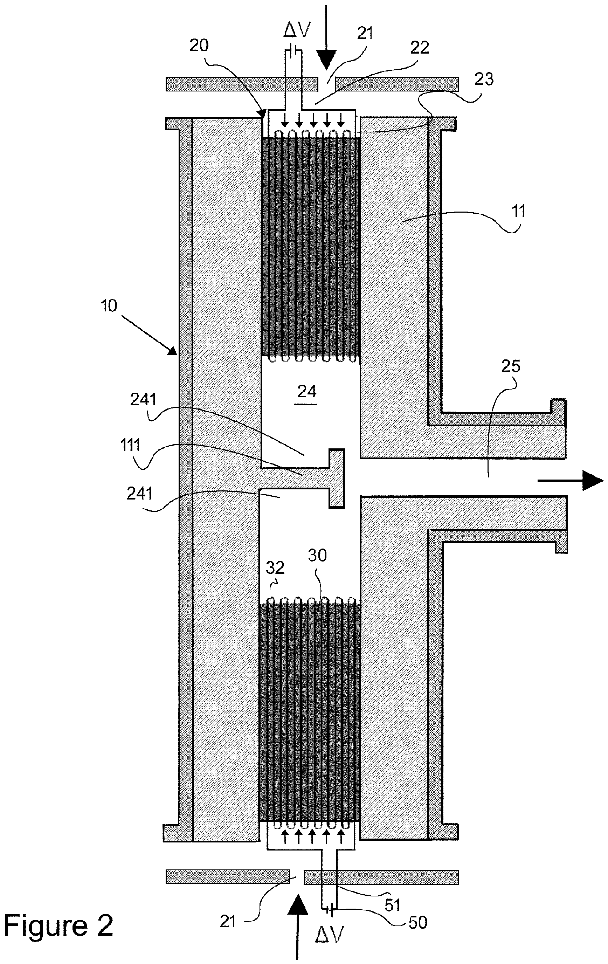

Referring to figure 1, 2 and 4, a deposition chamber (241) in a cavity shape is provided in the continuation of the reaction section (23), in a different level from the product stream outlet (25). In the embodiment that the reactor shell (10) has one reaction section (23), the deposition chamber (241) is provided in the lower level than the product stream outlet (25). In the embodiment shown in figure 2, the diverting section (111) defines two depositions chambers (241) as facing the reaction sections (23).

The structured ceramic bed (30) is arranged within the reaction section (23). Referring to figures 1, 2 and 3, the structured ceramic bed (30) has plurality of hollow flow paths (32) which allow the reactive mixture stream to pass therethrough. The structured ceramic bed (30) can be in a form of pellet, pipe, monolith or other ceramic shapes, having axial length lower than 300 cm, with plurality of hollow flow paths (32) possibly formed as a combination of multiple elements disposed in a juxtaposed manner. Accordingly, form and deployment of the hollow flow paths (32) are defined by the structure of the structured ceramic bed (30). The manufacturing of the structured ceramic bed (30) makes use of no limiting examples of ceramic material including SiO₂, Al₂O₃, Y₂O₃, WO₃, ZrO_{2,} TiO₂, MgO, CaO, CeO₂ and mixture thereof.

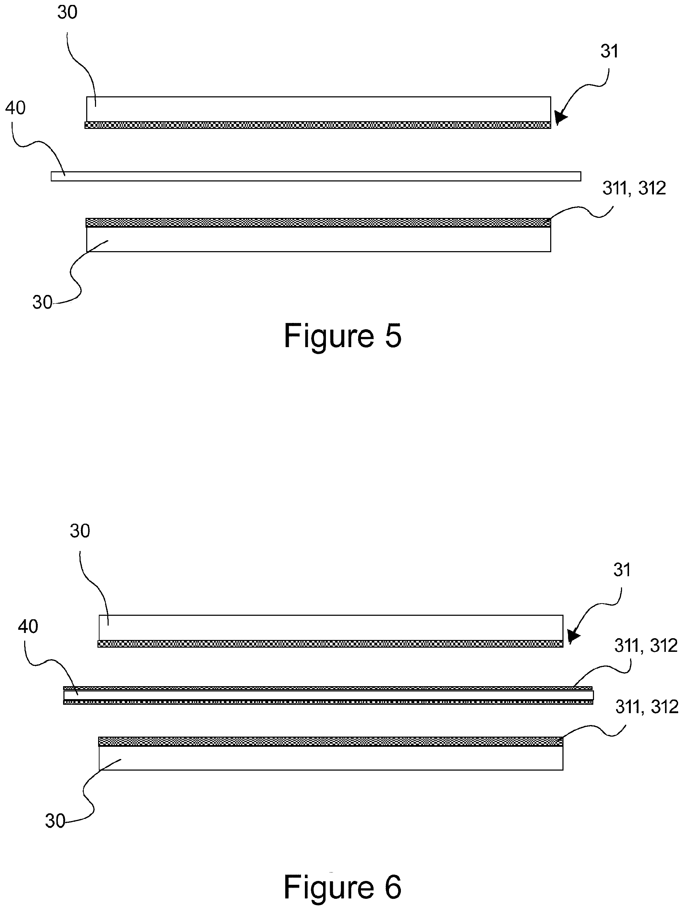

Referring to figure 5, a coating (31) is provided on the surface of the hollow flow paths (32) facing the electrical heating means (40). The coating (31) may be a barrier coating (311) or a catalytically active coating (312). The barrier coating (311) has a thickness that does not -affect the heat transfer. In the preferred embodiment the barrier coating (311) and/or the catalytically active coating (312) has a thickness lower than 500 µm. The material of the coating (31) contains elements from the group IIA, IIIB, IVB, VIIB, IIIA, IVA of the periodic table. Thanks to the physicochemical properties of the structured ceramic bed (30), the deposition and stabilization of the coating (31) is favored. Referring to Figure 6, in an alternative embodiment, the coating (31) is also provided on the surface of the electrical heating means (40) facing the structured ceramic bed (30). In both cases, the coating (31) is provided on the surface which is in contact with the reactive mixture stream.

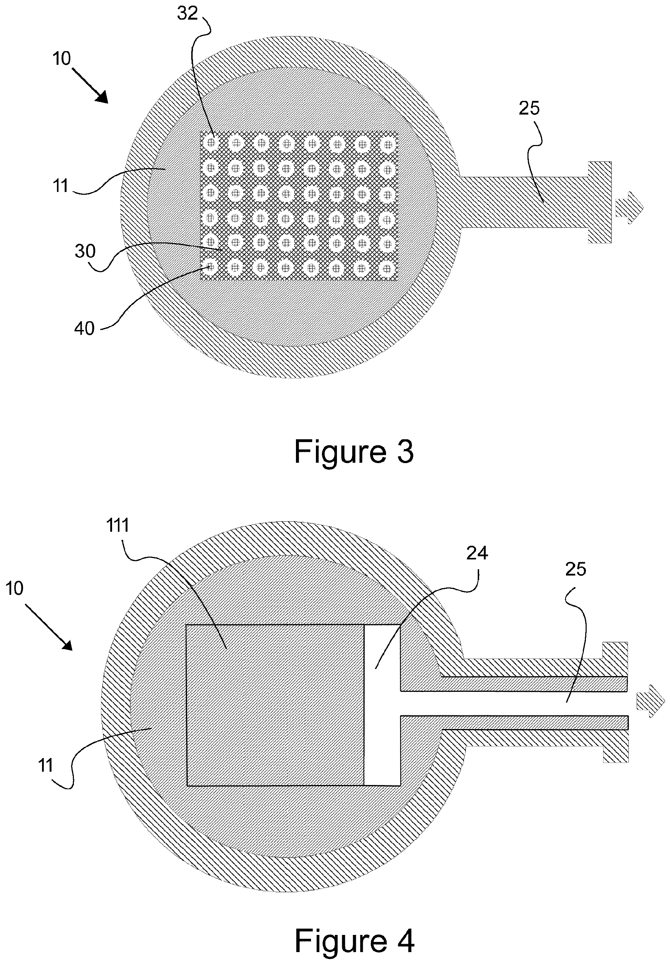

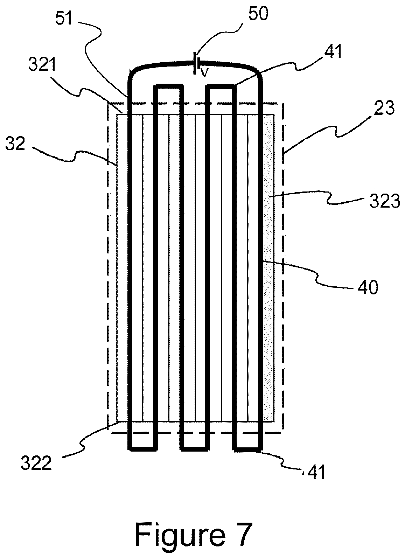

As shown in Figures 3 and 7, the electrical heating means (40) of the invention is arranged within the hollow flow paths (32) so that the contact of the electrical heating means (40) and the reactive mixture stream is provided. In detail, in a preferred embodiment of the invention, the electrical heating means (40) are meandered through some or all of the plurality of hollow flow paths (32). The physical proximity of the electrical heating means (40) with the structured ceramic bed (30) and the direct contact with the reactive mixture stream enhance the heat transfer via radiation, convection and conduction. Related to this, the combination of the structured ceramic bed (30) and the electrical heating means (40) must be arranged in a way to minimize the pressure drop while maintaining high heat and mass transfer. For instance, it is preferred that electrical heating means (40) is sized to leave an adequate flowing passage (323) inside the hollow flow path (32) once it is installed so that the flow of the reactive mixture stream is minimally affected while maintaining proximity to the structured ceramic bed (30), i.e. to inner walls of the hollow flow paths (32).

On the other hand, the deployment and installation of the electrical heating means (40) within the hollow flow paths (32) is imposed by the selected type of the structured ceramic bed (30) such as pellet, pipe and monolithic types.

For instance the structured ceramic bed (30) is an assembly of pipes with longitudinal channels combined one next to the other in a juxtaposed manner, defining a grid like cross section. Thanks to juxtaposed arrangement, the flow is confined inside the hollow flow paths (32) inside of which is heated and reacted. If the hollow flow paths (32) are formed in not juxtaposed manner, bypass of flow may occur in bypass regions left between the neighbouring hollow structures. Since said bypass regions are outside of the hollow flow paths (32) and thus not in contact with the heating means, the temperature of the gas flow decreases with a resulting in low conversion of the reactants. Thus, if a monolithic structured ceramic bed (30) is used in the reactor shell (10), as shown in Figure 3 and 7, the electrical heating means (40) is placed longitudinally within the hollow flow paths (32), extending co-axially to the flow direction of the reactive mixture stream while the meandered sections (41) of the electrical heating means (40) remain outside the hollow flow paths (32). Thus, when installing the electrical heating means (40), preferably in resistive wire form, in the structured ceramic bed (30), the resistive wire is inserted from a flow path inlet (321) of a first hollow flow path and exited from the opposite side of the same, a flow path outlet (322). Afterward the wire enters a second hollow flow path (32), exits and continues its way in the remaining hollow flow paths (32), as shown in Figures 3 and 7.

If, foam type, i.e. open cell form type, structured ceramic bed (30) is selected the electrical heating means (40) may extend omnidirectional similar to the hollow flow paths (32) defined by the foamy structure. In detail, the electrical heating means (40) is passed through the open cells, defining the hollow flow paths (32), of the structured ceramic bed (30) from its inlet to the outlet opening, creating a heating passage along the placement of the electrical heating means (40). In this case, the reactive mixture stream flows omnidirectional due to the omnidirectional open structure of the open cell foam of the structured ceramic bed (30). The meandering of the electrical heating means (40) is done in a similar way to the previously described embodiment, namely, being meandered along the hollow flow paths (32) in open cell structure along the structured ceramic bed (30), forming heating passages where the reactive mixture stream flows.

Preferably, the electrical heating means (40) is a resistive wire. The resistive wire has a cross surface area lower than 0.30 cm² that can be easily meandered and host in the hollow flow paths.

In alternative embodiments, however, resistive heating element in rod or spring forms, namely coiled form, may also be used. The material of the electrical heating means (40) is FeCrAl alloys or other material having resistivity from 1 × 10⁻⁷ Ω m to 1 × 10⁻⁵ Ω m.

In the light of the above mentioned structural properties of the invention, how the reaction process progress is explained below in detail.

Firstly, a gaseous reactive mixture stream is fed through the reactive stream inlet (21) into the distribution section (22). Said reactive mixture stream has a temperature ranging from 400 °C to 700 °C and a pressure ranging from 1 bar to 10 bar. The reactive mixture stream consists of steam and one or more hydrocarbons selecting from naphtha, ethane, propane, gas oil and liquefied petroleum gas. Afterwards, the fed reactive mixture stream travels to the structured ceramic bed (30) which is arranged in the reaction section (23).

In the structured ceramic bed (30), the reactive mixture stream of steam and hydrocarbons after reaching adequate temperature undergoes non-catalytic gas-phase radical reaction of steam cracking.

The hollow flow paths (32) are configured to prevent any stream bypass therebetween. In other words, the entire reactive mixture stream flowing through the structured ceramic bed (30) flows through the plurality of hollow flow paths (32). Thanks to this arrangement, the reactive mixture stream passing through the structured ceramic bed (30) will not only increase its temperature but also react within the structured ceramic bed (30) as the gas phase radical reaction has been initiated. Enhanced heat transfer minimizes the temperature gradients and the herein disclosed configuration achieves heat fluxes higher than 100 kW m⁻².

The structured ceramic bed (30) functions as a physical boundary that prevents electric shorts of the electrical heating means (40), as refractory material, that exchanges heat with the reactive mixture stream via radiation, convection and conduction and also as support of the coating (31) that prevents and minimizes coke deposition.

Since the structured ceramic bed (30) might have acid sites but no catalytically active phases, as Ni present in traditional cracking coils, coke deposition is minimized. Additionally, in one of the embodiments, a barrier coating (311) provided on the surface of the structured ceramic bed (30) separates the reactive mixture stream from the surface of the structured ceramic bed (30) that, even if does not present substances that can catalyse coke, it might present acid sites that enhances coke. Thanks to the barrier coating (311), the coke deposition is minimized. Accordingly, there is not any clogging of the structured ceramic bed (30) as consequence of a solid formation (coke deposition) that imposes higher pressure drop and reactor regeneration via coke gasification. This means that the downtime of the reactor is also minimized.

In another embodiment, other than the barrier coating (311), the catalytically active coating (312) can be present. The material of the catalytically active coating (312) activates the oxidation of the coke, that may be produced in the gas phase during the stream cracking reactions, with the steam available in the reactive mixture stream.

The barrier coating (311) provided on the surface of the electrical heating means (40) also separates the reactive mixture stream from the surface of the electrical heating means (40) and prevents the coke formation. If the electrical heating means (40) is coated with the catalytically active coating (312), the oxidation of the coke is activated in the same way as on the structured ceramic bed (30).

The further advantages of steam cracking by using the coated structured ceramic bed (30) with electrical heating means (40) in the invented way, as explained above, are as follows:
- Reduced CO₂ emissions,
- Increased thermal efficiency,
- Maximum reaction temperature,
- Lower pressure drop

Thanks to electrified heating, combustion with air and production of NOₓ usually vented at concentrations between 50 mgm⁻³ to 100 mgm⁻³ is avoided. Also, the absence of flue gas avoids necessity to build furnace stacks that vent the exhausted gas.

In the embodiment shown in Figure 2, at least two reaction sections (23) are hosted in the same reactor shell (10). This minimizes the number of the in-parallel connected reactor shells (10) and therefore minimizes the cost of the steam cracking plant that it is conceived as an assembly of multiple in-parallel connected reactor shells (10).

The product stream is collected in the collecting section (24) and finally arrives at the product stream outlet (25) before leaving the reactor shell (10). In the embodiment having two reaction sections (23), the diverting section (111) assists to divert all product streams towards the product stream outlet (25).

In case there is any coke formation, it is accumulated in the deposition chamber (241) provided in the collecting section (24) and does not block the product stream from travelling to the product stream outlet (25). Also, the deposition chamber (241) may collect any ceramic pieces in case the structured ceramic bed (30) is damaged and thanks to this configuration, the product stream does not contain any foreign substance that could clog the product stream outlet (25) or downstream equipment.Traditional system for heat recovery from the product stream (transfer line exchanger) and downstream fractionation units remain in place since the disclosed reactor shell (10) and process well integrate with the existing up- and downstream facilities. In this case, a multiplicity of electrified steam crackers are in parallel connected to the downstream equipment via manifold.

The above explained reactor shell (10) structure and steam cracking process realized therein avoids fuel combustion and the CO₂ emission is reduced by at least 80 %; from more than 1 ton to only 0.2 ton of CO₂ per ton of ethylene produced. Zero CO₂ emission is also possible as the herein disclosed steam cracking process facilitates CO₂ capture; CO₂ is present only in the product stream and is not diluted with nitrogen in big flow rates of flue gases that leave the furnace.

By means of the above explained system and process with respect to olefin production via steam cracking, following results can be obtained:
- the homogenously distributed and in situ heat generation and the minimized temperature gradient in the reaction section (23);
- increased desired product selectivity as consequence of temperature homogeneity, lower pressure drop and higher reaction temperature;
- lower steam consumption as the tunable and homogeneous temperature profile within the reaction section (23) decreases the required steam partial pressure;
- simplified downstream separation and purification processes as consequence of higher selectivities;
- the possibility to exploit renewable electricity and therefore to use an inexpensive energy source while stabilizing the grid;
- the possibility to convert free electrons into chemical energy exploiting a traditional and extensively used thermochemical process;
- the minimization of the capital costs connected with the process intensification and the learning factor of a modular plant configuration (number up, learning factor);
- the high reaction temperature that reaches 1200 °C;
- the minimized pressure drop as result of the high void volume of the herein described coated structured ceramic bed (30);
- the minimized spalling as the structured ceramic bed (30), that supports the coating (31), has physicochemical properties that enhance interface adhesion and stability between support and coating (31);
- longer operability before regeneration thus lower downtime costs as result of the reduced coke deposition.

As well as the advantages of the above mentioned design of the reactor shell (10), other advantages related with costs and integration are given below.

The disclosed reactor shell (10) configuration makes possible to operate the reactor at cold skin temperature and therefore to minimize the costs of the construction materials. All the mechanical parts are manufactured with steels for low temperatures with a drastic decrease in the capital cost of the plant. In this way not only the manufacturing costs are decreased but also the surfaces that poorly support barrier coating (311) and/or catalytically active coatings (312) are minimized with a consequent minimization of coke deposition.

The reactor shell (10) avoids expensive and complicated fired furnaces that contains burners and reactor coils, namely fireboxes, as well as economizers, preheaters and superheaters. As consequence of the absence of flue gases, there is a drastic reduction of surplus steam that currently prevents the shift from steam to electric driven compressors.

The process realized in the reactor shell (10) makes possible to achieve plant modularization that minimizes the variation in plant productivity connected with routine or not-ordinary maintenance of sub-units of the steam cracking process.

It makes possible to fast start up and shut down the steam cracking process thanks to joule heating as the equipment have cumulative volume lower by at least two order of magnitude compared to fired cracking furnaces used in the current state of art. The heat capacity of the reactors is lower and the dynamic is faster. This makes possible to achieve sector coupling (energy system integration) between the chemical and electricity sector that is required in a climate-neutral economy. The design of the reactor shell (10) can vary its productivity to stabilize the electric grid and therefore bring an additional profit to the plant operator.

The reactor system of this invention can replace existing cracking furnaces or be integrated as an auxiliary plant section that boosts productivity, flexibility and/or compensates for downtime of existing fired steam crackers.

The steam cracking process of the present invention can be applied both on traditional centralized steam crackers used in existing petrochemical plants, that produce more than 1 000 000 ton of ethylene per year, but also in decentralized application where compact, inexpensive and modular technology would help achieving zero routing gas flaring.

## Claims

1. A reactor shell (10) for producing olefins via steam cracking from a fed reactive mixture stream composed of steam and hydrocarbons **characterized by** comprising:
at least one reactive stream duct (20) formed within said reactor shell (10) and essentially having at least one reactive stream inlet (21) where said reactive mixture stream is fed, a product stream outlet (25) where a product stream of olefins exits the reactor shell (10) and at least one reaction section (23) provided between said reactive stream inlet (21) and said product stream outlet (25),
an insulation filling (11) at least partly encompassing said reactive stream duct (20),
a structured ceramic bed (30) accommodated in said reaction section (23) and having a plurality of hollow flow paths (32) which are configured to allow the reactive mixture stream to pass therethrough,
an electrical heating means (40), arranged inside at least some of said hollow flow paths (32) in a manner that there still remains a flowing passage (323) inside the hollow flow paths (32) and powered by an electrical power supply (50) for heating the reactive mixture stream to a predetermined temperature that initiates a non-catalytic gas phase radical reactions of steam cracking,
a coating (31) provided on a surface contacting with the reactive mixture stream in order to minimize the coke deposition thereon.

2. A reactor shell (10) according to Claim 1, wherein the electrical heating means (40) comprises meandered sections (41) so that it extends in a meandered manner along hollow flow paths (32).

3. A reactor shell (10) according to Claims 1 or 2, wherein the electrical heating means (40) is a resistive heating element.

4. A reactor shell (10) according to any of the preceding Claims, wherein the electrical heating means (40) and the electrical power supply (50) are configured to heat the reactive mixture stream up to a temperature 1200 °C.

5. A reactor shell (10) according to any of the preceding Claims, wherein the structured ceramic bed (30) is a monolith or an assembly of subunits arranged in juxtaposed manner forming a multiplicity of flow paths (32).

6. A reactor shell (10) according to Claim 1, wherein the reactive stream duct (20) further comprises a distribution section (22), which is formed in the continuation of the reactive stream inlet (21), for distributing the reactive mixture stream into the reaction section (23) and a collecting section (24), which is formed in the continuation of the reaction section (23), for collecting the product stream and diverting it towards the product stream outlet (25).

7. A reactor shell (10) according to any of the preceding Claims, comprises two reaction sections (23) provided as aligned in the same direction wherein the insulation filling (11) has a diverting section (111) therebetween in order to divert all the product stream towards the product stream outlet (25).

8. A reactor shell (10) according to Claim 1, the material of the structured ceramic bed (30) is selected from the group consisting of SiO₂, Al₂O₃, Y₂O₃, WO₃, ZrO₂. TiO₂, MgO, CaO, CeO₂ and mixture thereof

9. A reactor shell (10) according to Claim 1, the material of the coating (31) contains elements from the group IIA, IIIB, IVB, VIIB, IIIA, IVA of the periodic table.

10. A reactor shell (10) according to Claim 1, the coating (31) is provided on the surfaces of the hollow flow paths (32) facing the electrical heating means (40).

11. A reactor shell (10) according to Claim 10, the coating (31) is provided on the surface of the electrical heating means (40) facing the structured ceramic bed (30).

12. A reactor shell (10) according to Claim 10 or 11, the coating (31) is a barrier coating (311) preventing the contact between the reactive mixture stream and the structured ceramic bed (30) and/or the electrical heating means (40) and having a thickness that does not affect the heat transfer.

13. A reactor shell (10) according to Claim 10 or 11, the coating (31) is a catalytically active coating (312) in order to activate the oxidation of any potential coke and having a thickness that does not affect the heat transfer.

14. A method for producing olefins via steam cracking from a fed reactive mixture stream composed of steam and hydrocarbons in a reactor shell (10) comprising at least one reactive stream duct (20) essentially having a reactive stream inlet (21), a product stream outlet (25) and a reaction section (23) provided between said reactive stream inlet (21) and product stream outlet (25), an insulation filling (11) at least partly encompassing said reactive stream duct (20), a structured ceramic bed (30) accommodated in said reaction section (23) and having a plurality of hollow flow paths (32) which are configured to allow the reactive mixture stream to pass therethrough, an electrical heating means (40), powered by at least two electrical feeds (51) connected to an electrical power supply (50), for heating the reactive mixture stream to a predetermined temperature that initiates a non-catalytic gas phase radical reactions of steam cracking, and a coating (31) provided on a surface contacting with the reactive mixture stream, said method comprising the steps of:
arranging said electrical heating means (40) inside at least some of said hollow flow paths (32) in a manner that a flowing passage (323) inside the hollow flow paths (32) still remains
energizing the electrical heating (40) means via an electric power supply (50) so that the reactive mixture stream is heated up to 1200 °C
feeding reactive mixture stream with a temperature ranging from 400 °C to 700 °C and a pressure ranging from 1 bar to 10 bar to the reactor shell (10) through said reactive stream inlet (21)
allowing the reactive mixture stream to pass through said hollow flow paths (32) in a manner that the reactive mixture stream contacts the electrical heating means (40) and the structured ceramic bed (40)
allowing a product stream of olefins to exit from said product stream outlet (25).

15. A method according to Claim 14, the reactive mixture stream undergoes non-catalytic gas-phase radical reaction of steam cracking in the reaction section (23).
